(19) **Europäisches Patentamt**

**European Patent Office**

**Office européen des brevets**

(11) **EP 0 983 491 B1**

(12) **EUROPEAN PATENT SPECIFICATION**

| | |
|---|---|
| (45) Date of publication and mention of the grant of the patent:<br>**05.04.2006 Bulletin 2006/14** | (51) Int Cl.:<br>**G01J 5/10** *(2006.01)*  **G01J 5/34** *(2006.01)* |
| (21) Application number: **98911443.4** | (86) International application number:<br>**PCT/US1998/004009** |
| (22) Date of filing: **27.02.1998** | (87) International publication number:<br>**WO 1999/044020 (02.09.1999 Gazette 1999/35)** |

(54) **PYROELECTRIC DETECTOR FEEDBACK AMPLIFIER WITH LOW FREQUENCY RESPONSE**

RÜCKGEKOPPELTER VERSTÄRKER MIT NIEDRIGEM FREQUENZGANG FÜR EINEN PYROELEKTRISCHEN DETEKTOR

AMPLIFICATEUR POUR DETECTEUR PYROELECTRIQUE AVEC REACTION BASSE FREQUENCE

| | |
|---|---|
| (84) Designated Contracting States:<br>**DE FR GB** | (74) Representative: **Ebner von Eschenbach, Jennifer et al**<br>**LADAS & PARRY LLP**<br>**Dachauerstrasse 37**<br>**80335 München (DE)** |
| (43) Date of publication of application:<br>**08.03.2000 Bulletin 2000/10** | |
| (73) Proprietor: **Honeywell International Inc.**<br>**Morristown,**<br>**New Jersey 07962-2245 (US)** | (56) References cited:<br>**GB-A- 2 206 202**  **JP-A- 1 047 920**<br>**JP-A- 61 201 121**  **US-A- 5 352 895** |
| (72) Inventor: **MICKO, Eric, S.**<br>**Rescue, CA 95672 (US)** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**Technical Field**

This invention relates generally to a pyroelectric detector device and in particularly to a pyroelectric detector amplifier circuit having a feedback path for multiplying the resistance of a detector element resistor load at non-zero frequencies.

**Background Art**

Pyroelectric detectors produce small amounts of , electric charge whenever their temperature is changed. Often, these detectors are designed to undergo changes in temperature in response to incident electromagnetic radiation. Thus, an electric charge can be generated in response to any situation where electromagnetic radiation can change the temperature of the detector. The charge can be measured by electronic instrumentation which conveys a result in generally usable form.

Pyroelectric detectors are not typically used to measure steady temperatures (as with a thermometer). With pyroelectric detectors, such measurement would require precise accounting for very small amounts of electric charge, which is not practical with available technology. Therefore, pyroelectric detectors are used to measure changes in temperature. A detector designed to respond to electromagnetic radiation thus produces electric charge in response to changes in radiation incident upon it.

A typical application of a pyroelectric detector is to detect human beings who emit infrared light (a form of electromagnetic radiation). Optical elements are designed to focus infrared light from a certain volume of space onto a pyroelectric detector. A human being moving into the volume of space will cause a change in the amount of electromagnetic radiation incident upon the detector, which in turn will produce a small amount of electric charge in response. By adding electric instrumentation to such a combination of optics and detectors, a human motion sensor is created.

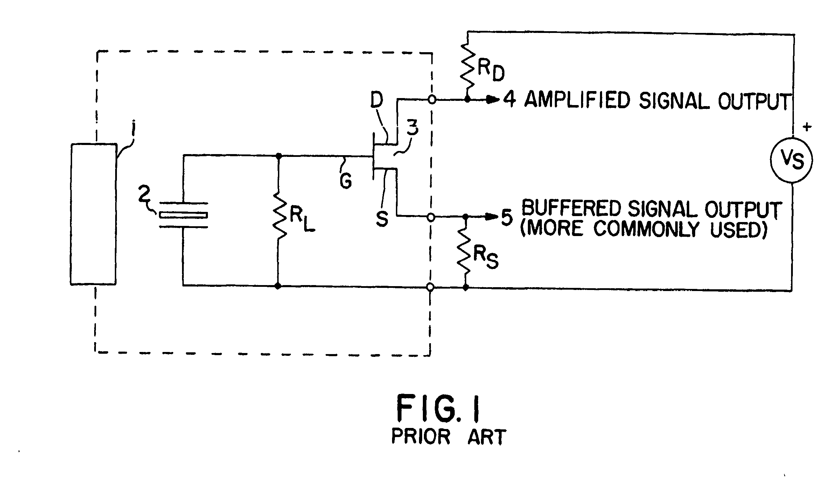

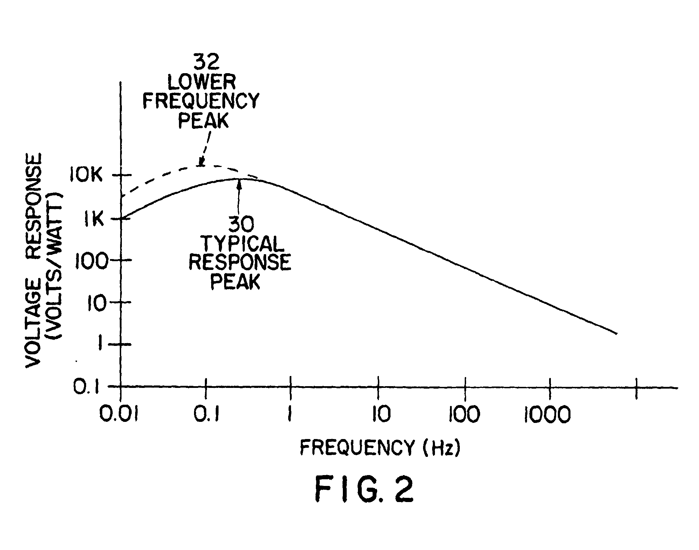

Charge from a pyroelectric detector may be measured in many different ways- One common method is to connect a load resistor ($R_L$) in parallel with the pyroelectric sensor element 2 positioned in a package adjacent to a window 1 as shown in FIG. 1, and to measure the transient voltage produced by the charge flowing from the pyroelectric sensor element 2 in response to a change in temperature. Due to the physical characteristics of the detector, the magnitude of the resultant voltage varies with the rate of temperature change. This variation is often described by means of a frequency response graph as shown in FIG. 2, which shows peak voltage per watt of incident energy (causing temperature change) versus the frequency of application of the energy.

When used in the parallel load resistor ($R_L$) configuration, pyroelectric detectors exhibit a peak response at a certain frequency. The load resistor is one element determining the location of the low frequency shoulder of the peak. Increasing the amount of load resistance moves the peak to a lower frequency. For many applications, a low frequency peak is desirable. However, the necessary load resistor may be in the hundreds of gigaohms. Resistances of this magnitude are difficult to fabricate. Moreover, instrumentation circuits utilizing such resistances are often problematic.

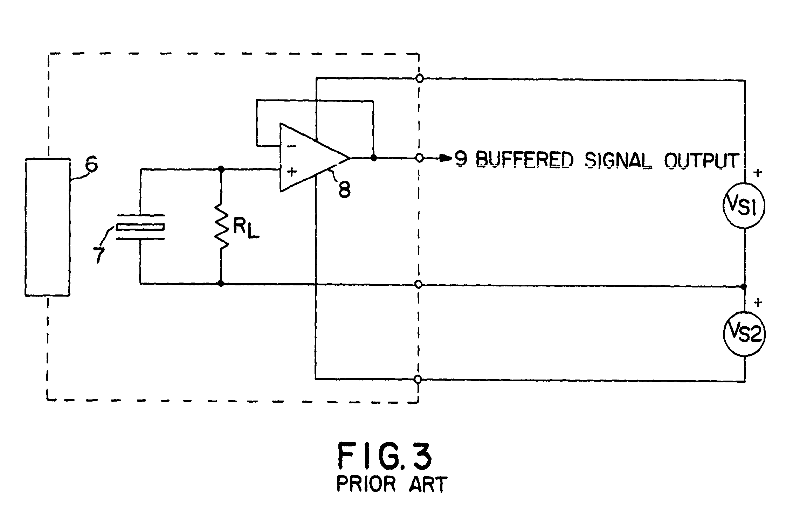

Another conventional pyroelectric detector is shown in FIG. 3 comprising an operational amplifier 8 used as a buffer for the pyroelectric sensor element 7 located in a package adjacent to a window 6. The operational amplifier adds a much smaller offset voltage than does the FET in FIG- 1 and it duplicates the pyroelectric sensor element 7 output voltage within a factor closer to unity (0.9995 to 1.0). However, these attributes are typically not critical to pyroelectric detector applications, so FET is the amplifier element most commonly used because it is less expensive.

U.S. Patent No. 5,352,895, issued October 4, 1994 to Masao Inoue discloses a pyroelectric device comprising a pyroelectric member for detecting infrared radiation, and a field effect transistor (FET) connected to the pyroelectric member for amplifying the relatively small amount of electric charge produced in response to incident energy. Capacitors are connected to the source and drain of the FET for stabilizing an applied voltage and to cut high-frequency induced noise. A gate resistor is connected between the terminals of the pyroelectric member. The pyroelectric member is made of PVD or PZT materials and the gate resistor used for fire detection has a resistance ranging from 5 to 50 gigaohms and in particular claimed for 10 gigaohms. However, the FET amplifier does not provide for multiplying the resistance of the gate resistor 12 at non-zero frequencies.

U.S. Patent No. 5,262,647, issued November 16, 1993 to Akira Kumada discloses an infrared detector with a pyroelectric detector element and an operational amplifier having a chopper control circuit that enables the detector to sense either a moving person or temperature. A chopper mechanism interrupts an infrared ray input to the pyroelectric infrared detector element. A gain control circuit is connected to the operational amplifier for controlling the amplifier gain. However, the operational amplifier does not provide for multiplying the resistance of the load resistor at non-zero frequencies.

## Disclosure of the Invention

Accordingly, it is therefore an object of this invention to provide a feedback buffer amplifier for receiving the output of a pyroelectric detector element at the junction of a load resistor ($R_L$) for multiplying the resistance of the load resistor ($R_L$) at non-zero frequencies.

It is another object of the invention to enable the use of smaller resistances, which are easier to fabricate, in the pyroelectric detector by providing an effective load resistance as a result of feedback from a buffer amplifier output which multiplies the resistance of the load resistor.

It is a further object of the invention to more easily manage a quiescent (zero-frequency) output of the pyroelectric detector with smaller load resistors, in the presence of a buffer amplifier input bias current.

These and other objects are further accomplished by a pyroelectric detector comprising means for sensing infrared radiation, means connected in parallel with the sensing means for providing a load to measure the sensing means output, means coupled to the output of the sensing means for buffering the output, and a feedback means connected from an output to an input of the buffering means for producing multiplication of the resistance of the load. The sensing means comprises a pyroelectric ceramic material. The load means comprises a first resistor in series with a second resistor. The feedback means comprises a capacitor connected between the buffering means output and the load means. The buffering means comprises a field effect transistor. The buffering means comprises an operational amplifier. The buffering means comprises a gain of near unity. The multiplication of the load resistance improves a peak low frequency response of the sensing means. The buffering means comprises a source resistor for providing a buffered output of the sensing means output from the buffering means.

The objects are further accomplished by a pyroelectric detector comprising means for sensing infrared radiation, means connected in parallel with the sensing means for providing a load to measure the sensing means output, the load comprising a first load resistor in series with a second resistor, means coupled to the output of the sensing means for buffering the sensing means output, the buffering means comprising an output divider which includes a first source resistor connected in series with a second source resistor, and the detector further comprising a feedback means connected from the junction of the first source resistor and the second source resistor to the junction of the first load resistor and the second resistor for producing multiplication of the load. The sensing means comprises a pyroelectric ceramic material. The feedback means of the buffering means comprises a capacitor. The buffering means comprises a field effect transistor. The buffering means comprises a gain of near unity. The multiplication of the load resistor improves a peak low frequency response of the sensing means.

The objects are further accomplished by a method of providing a pyroelectric detector comprising the steps of sensing infrared radiation, connecting a load in parallel with means for sensing the infrared radiation, buffering the output of the sensing means with amplifier means, and providing a feedback means in the amplifier means connected from an output to an input of the amplifier means for producing multiplication of the resistance of the load. The step of sensing infrared radiation comprises the step of using a sensor having pyroelectric ceramic material. The step of connecting the load comprises the step of connecting a first resistor in series with a second resistor. The step of providing the feedback means comprises the step of connecting a capacitor between the amplifier means output and the load at the amplifier means input. The step of buffering the output of the sensing means comprises the step of using a field effect transistor. The step of buffering the output of the sensing means comprises the step of using an operational amplifier. The step of providing feedback for producing multiplication of the resistance of the load improves a peak amplitude of a low frequency response of the sensing means.

## Brief Description of the Drawings

The appended claims particularly point out and distinctly claim the subject matter of this invention. The various objects, advantages and novel features of this invention will be more fully apparent from a reading of the following detailed description in conjunction with the accompanying drawings in which like reference numerals refer to like parts, and in which:

FIG. 1 is a circuit diagram of a conventional pyroelectric infrared radiation detector having a field effect transistor (FET) as an amplifying element;

FIG. 2 shows a graph of the voltage response in volts/watt from a pyroelectric detector element versus the frequency of electromagnetic radiation incident on the detector element;

FIG. 3 is a circuit diagram of another conventional pyroelectric infrared radiation detector having an operational amplifier as an amplifying element;

FIG. 4 is a circuit diagram of a pyroelectric infrared radiation detector according to the present invention; and

FIG. 5 is a circuit diagram of an alternate embodiment of a pyroelectric infrared radiation detector according to the present invention.

**Best Mode for Carrying Out the Invention**

Referring to FIG. 1, a pyroelectric detector as known in the prior art is shown comprising a pyroelectric sensor element 2 located adjacent to a package window 1, a load resistor ($R_L$) connected between the terminals of the pyroelectric sensor element 2, a field effect transistor (FET) 3, a drain resistor $R_D$ connected between an FET 3 drain terminal and a voltage source ($V_S$), and a source resistor ($R_S$) connected between an FET 3 source terminal and the return side of the voltage source ($V_S$). Infrared radiation passes through the window 1 and an optical filter (not shown) and is received in the pyroelectric element 2. The $R_S$ and $R_D$ resistors and the voltage source ($V_S$) are externally connected to the packaged pyroelectric element 2 with its $R_L$ and amplifier FET 3. A buffered signal output 5 is provided at the source (S) of FET 3. With the addition of an offset voltage between the FET gate (G) and source (S), the voltage from the pyroelectric sensor element 2 is duplicated at the FET 3 source (S) within a gain factor between 0.95 and 1.0. Less commonly used is the amplified signal output 4 at the FET 3 drain (D).

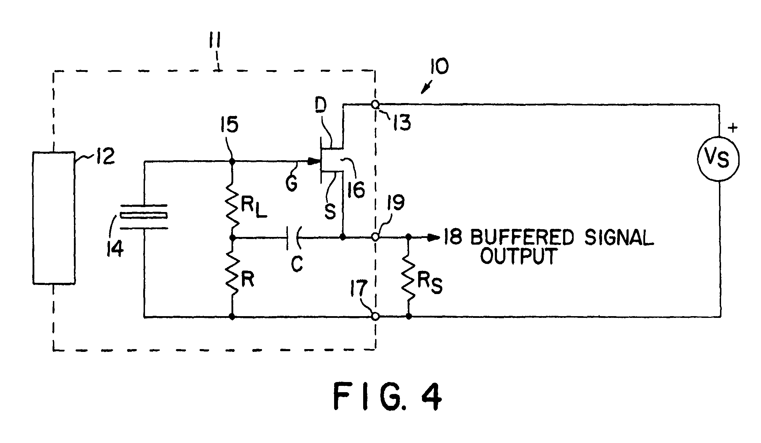

Referring now to FIG. 4, a pyroelectric detector 10 circuit diagram of an embodiment of the present invention is shown. The circuit diagram of the pyroelectric detector 10 shows a package 11 having a window 12 with an external source resistor ($R_S$) connected to a source terminal 19 and voltage source ($V_S$) connected to a drain terminal 13. The package 11 comprises a pyroelectric sensor element 14 positioned within the package 11 adjacent to window 12 with an optical filter (not shown) for preventing white light from affecting the sensor element 14, a resistor network having a load resistor ($R_L$) in series with a resistor R connected between the terminals of the pyroelectric sensor element 14, and a field effect transistor 16 having a gate (G) connected to an output terminal of the pyroelectric sensor element 14 and $R_L$ at node 15. Further, there is a capacitor (C) connected between the source terminal 19 of FET 16 and the junction cf series resistors $R_L$ and R. The junction of resistor R and the second terminal of the pyroelectric element are connected to terminal 17 of package 11. The source resistor ($R_S$ is connected externally between the FET 16 source terminal 19 and terminal 17. The positive terminal of voltage source ($V_S$) is connected to the drain terminal 13 of FET 16 and the return side of $V_S$ is connected to terminal 17 of package 11. A buffered signal output 18 voltage is measured at the source (S) of FET 16 across resistor $R_S$.

Still referring to FIG- 4, feedback is introduced from the source output of buffer FET 16 to the gate input of buffer FET 16 via capacitor C and load resistor $R_L$. The effect of this feedback is to multiply the value of the load resistor $R_L$ by the following factor at typical measurement frequencies:

$$\frac{1}{1-(buffer\ FET\ gain\ factor)}$$

At zero frequency the load resistance equals the non-multiplied value of $R_L$ +R. The resistance R may be selected to be much smaller than $R_L$ and determines along with capacitor C the time at which the feedback path becomes active. Thus, at zero frequency, where C is an open circuit, the load resistance R + $R_L$ approximately equals $R_L$. Conversely, at frequencies substantially above $1/2\pi RC$, where C can be regarded as a short circuit, the load resistance approximately equals:

$$\frac{R_L}{1-(buffer\ FET\ gain\ factor)}$$

The product RC may be increased as desired to produce extended low frequency response of the pyroelectric sensor/buffer circuit, until thermal response of the detector sensor element 14 limits low frequency response. The extension is accomplished without excessively high resistances for $R_L$, since $R_L$ is multiplied at frequencies substantially above $1/2\pi RC$. At zero frequency, however, the buffer FET 16 sees a detector element load of essentially only $R_L$, which eases the requirement for its input bias current, which could cause excessive offset voltage if flowing into a resistance many times greater than $R_L$. For convenience, if a zero frequency load of $2R_L$ is tolerable, R may be equal to $R_L$. Because of the variation in buffer gain factor, especially in FET buffers, the gain factor can be reduced and made less dependent on the buffer circuit characteristics. This results in a smaller but more accurate $R_L$ multiplication.

Although the particular components of the pyroelectric detector circuit of FIG. 4 may vary depending on a particular application, the preferred embodiment comprises the following: The pyroelectric sensor element 14 may be embodied by a pyroelectric ceramic sensor as provided in Part No. LHi888 manufactured by EG&G Heimann Optoelectronics of Montgomeryville, Pennsylvania. The FET 16 may be embodied by a 2N4338 device which is available from many sources. The load resistor $R_L$ is 20 gigaohms, R is 2 gigaohms, C is 27 nanofarads and $R_S$ is 47 kiloohms-The source voltage ($V_S$) is 0.5 volts.

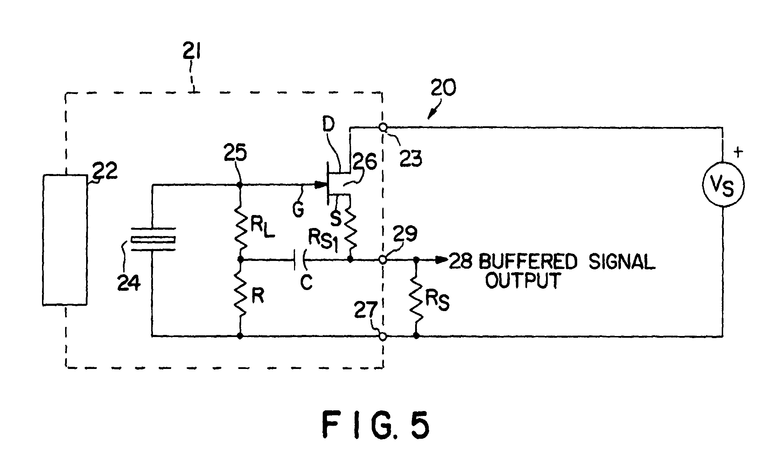

Referring now to FIG. 5, an alternate embodiment of a pyroelectric detector 20 is shown according to the present invention providing a method of gain factor reduction. Pyroelectric detector 20 comprises a package 21 having a window 22 with an optical filter (not shown) and an external source resistor ($R_S$) connected to a source terminal 29 and a voltage source ($V_S$) connected to a drain terminal 23. The package 21 comprises a pyroelectric sensor element 24 positioned within the package 21 adjacent to window 22, a resistor network having a load resistor $R_L$ in series with resistor R, said network connected between terminals of pyroelectric sensor element 24, and a field effect transistor 26 with the gate (G) connected to the output terminal of the pyroelectric sensor element 24 and $R_L$ at node 25. Further, the capacitor (C) is connected between the junction of the series resistor network, $R_L$ and R, and terminal 29 at the junction of series resistors $R_{S1}$ and $R_S$ which form an output divider with resistance values several orders of magnitude smaller than $R_L$. The output divider of $R_{S1}$ and $R_S$ provides for a smaller but more accurate load resistance multiplication. The positive terminal of voltage source $V_S$ is connected to the drain 23 of FET 26 and the return side of $V_S$ is connected to terminal 27 and $R_S$. The buffered signal output 28 voltage is measured at terminal 29 at the divider junction of $R_{S1}$ and $R_S$.

Because of, the variation in buffer gain factor, especially in FET buffers, the gain factor is reduced in the pyroelectric detector 20 of FIG. 5 which results in the smaller but more accurate $R_L$ multiplication. The net gain factor is equal to:

$$\frac{(FET\ gain\ factor)\,(R_S)}{R_{S1}+R_S}$$

The pyroelectric detector 20 components shown in FIG. 5 may be embodied by the same components as the pyroelectric detector 10 in FIG. 4 except for the additional resistor $R_{S1}$ which has a value of 4.7K ohms.

This invention has been disclosed in terms of certain embodiments. It will be apparent that many modifications can be made to the disclosed apparatus without departing from the invention. Therefore, it is the intent of the appended claims to cover all such variations and modifications as come within the scope of this invention.

**Claims**

1. A pyroelectric detector comprising:

   sensing means for sensing infrared radiation, said sensing means having an output;
   load means connected in parallel with said sensing means for providing a load to measure said sensing means output, wherein said load means comprise a first resistor connected in series with a second resistor, and wherein said first resistor and second resistor are connected at a junction;
   transistor buffering means having a gate coupled to said output of said sensing means for buffering said output; and
   feedback means comprising a capacitor connected between an output of said transistor buffering means and said junction of said first and second resistors for producing multiplication of the resistance of said load.

2. The pyroelectric detector as recited in Claim 1 wherein said sensing means comprises a pyroelectric ceramic material.

3. The pyroelectric detector as recited in Claim 1 wherein said buffering means comprises a field effect transistor.

4. The pyroelectric detector as recited in Claim 1 wherein said buffering means comprises a gain of near unity.

5. The pyroelectric detector as recited in Claim 1 wherein said multiplication of said load resistance improves a peak low frequency response of said sensing means.

6. The pyroelectric detector as recited in Claim 1 wherein said buffering means comprises a source resistor for providing a buffered output of said sensing means output from said buffering means.

7. A pyroelectric detector comprising:

   means for sensing infrared radiation;
   means connected in parallel with said sensing means for providing a load to measure said sensing means output, said load comprising a first load resistor in series with a second resistor;

transistor buffering means having a gate connected to said output of said sensing means for buffering said sensing means output;

an output divider having a first source resistor connected in series with a second source resistor to an output of said transistor buffering means; and

feedback means comprising a capacitor connected from the junction of said first source resistor and said second source resistor to the junction of said first load resistor and said second resistor for producing multiplication of said load.

8. The pyroelectric detector as recited in Claim 7 wherein said sensing means comprises a pyroelectric ceramic material.

9. A pyroelectric detector as recited in Claim 7 wherein said buffering means comprises a field effect transistor.

10. The pyroelectric detector as recited in Claim 7 wherein said buffering means comprises a gain of near unity.

11. The pyroelectric detector as recited in Claim 7 wherein said multiplication of said load resistor improves a peak low frequency response of said sensing means.

12. A method of providing a pyroelectric detector comprising the steps of:

providing a sensing means for sensing infrared radiation, said sensing means having an output;

connecting a load in parallel with said sensing means, wherein said load comprises a first resistor connected in series with a second resistor, and wherein said first and second resistors are connected at a junction;

buffering said output of said sensing means by supplying it to a gate of a transistor buffering means; and

providing a feedback means between said transistor buffering means and said load, said feedback means comprising a capacitor connected from an output of said transistor buffering means to said junction of said first and second resistors for producing multiplication of the resistance of said load.

13. The method as recited in Claim 12 wherein said step of sensing infrared radiation comprises the step of using a sensor having pyroelectric ceramic material.

14. The method as recited in Claim 12 wherein said step of buffering said output of said sensing means comprises the step of using a field effect transistor.

15. The method as recited in Claim 12 wherein said step of providing feedback for producing multiplication of the resistance of said load improves a peak amplitude of a low frequency response of said sensing means.

**Patentansprüche**

1. Pyroelektrischer Detektor, der folgendes umfasst:

eine Sensoreinrichtung zum Abfühlen von Infrarotstrahlung, wobei die genannte Sensoreinrichtung eine Ausgabe aufweist;

eine Lasteinrichtung, die parallel mit der genannten Sensoreinrichtung verbunden ist, um eine Last bereitzustellen, um die genannte Ausgabe der Sensoreinrichtung zu messen, wobei die genannte Lasteinrichtung einen ersten Widerstand aufweist, der in Reihe mit einem zweiten Widerstand verbunden ist, und wobei der genannte erste Widerstand und der zweite Widerstand an einer Verbindung miteinander verbunden sind;

eine Transistorpuffereinrichtung mit einem Gatter, das mit dem genannten Ausgang der genannten Sensoreinrichtung gekoppelt ist, um die genannte Ausgabe zu puffern; und

eine Rückführungseinrichtung, die einen Kondensator umfasst, der zwischen einen Ausgang der genannten Transistorpuffereinrichtung und die genannte Verbindung der genannten ersten und zweiten Widerstände gekoppelt ist, um eine Multiplikation des Widerstands der genannten Last zu erzeugen.

2. Pyroelektrischer Detektor nach Anspruch 1, wobei die genannte Sensoreinrichtung einen pyroelektrischen Keramikwerkstoff umfasst.

3. Pyroelektrischer Detektor nach Anspruch 1, wobei die genannte Puffereinrichtung einen Feldeffekttransistor umfasst.

**4.** Pyroelektrischer Detektor nach Anspruch 1, wobei die genannte Puffereinrichtung eine Verstärkung von nahe Eins aufweist.

**5.** Pyroelektrischer Detektor nach Anspruch 1, wobei die genannte Multiplikation des genannten Belastungswiderstands ein Spitzen-Niederfrequenzverhalten der genannten Sensoreinrichtung verbessert.

**6.** Pyroelektrischer Detektor nach Anspruch 1, wobei die genannte Puffereinrichtung einen Quellwiderstand umfasst, um eine gepufferte Ausgabe des genannten Sensoreinrichtungsausgangs aus der genannten Puffereinrichtung bereitzustellen.

**7.** Pyroelektrischer Detektor, der folgendes umfasst:

eine Einrichtung zum Abfühlen von Infrarotstrahlung;
eine Einrichtung, die parallel mit der genannten Sensoreinrichtung verbunden ist, um eine Last zum Messen der Ausgabe der genannten Sensoreinrichtung bereitzustellen, wobei die genannte Last einen ersten Belastungswiderstand umfasst, der in Reihe mit einem zweiten Widerstand verbunden ist;
eine Transistorpuffereinrichtung mit einem Gatter, das mit dem genannten Ausgang der genannten Sensoreinrichtung verbunden ist, um die genannte Ausgabe der Sensoreinrichtung zu puffern;
einen Ausgangsteiler mit einem ersten Quellwiderstand, der in Reihe mit einem zweiten Quellwiderstand mit einem Ausgang der genannten Transistorpuffereinrichtung verbunden ist; und
eine Rückführungseinrichtung, die einen Kondensator umfasst, der von der Verbindung zwischen dem genannten ersten Quellwiderstand und dem genannten zweiten Quellwiderstand mit der Verbindung des genannten ersten Belastungswiderstands und dem genannten zweiten Widerstand verbunden ist, um eine Multiplikation der genannten Last zu erzeugen.

**8.** Pyroelektrischer Detektor nach Anspruch 7, wobei die genannte Sensoreinrichtung einen pyroelektrischen Keramikwerkstoff umfasst.

**9.** Pyroelektrischer Detektor nach Anspruch 7, wobei die genannte Puffereinrichtung einen Feldeffekttransistor umfasst.

**10.** Pyroelektrischer Detektor nach Anspruch 7, wobei die genannte Puffereinrichtung eine Verstärkung von nahe Eins aufweist.

**11.** Pyroelektrischer Detektor nach Anspruch 7, wobei die genannte Multiplikation des genannten Belastungswiderstands ein Spitzen-Niederfrequenzverhalten der genannten Sensoreinrichtung verbessert.

**12.** Verfahren zur Bereitstellung eines pyroelektrischen Detektors, wobei das Verfahren die folgenden Schritte umfasst:

das Bereitstellen einer Sensoreinrichtung zum Abfühlen von Infrarotstrahlung, wobei die genannte Sensoreinrichtung einen Ausgang aufweist;
das Verbinden einer Last parallel mit der genannten Sensoreinrichtung, wobei die genannte Last einen ersten Widerstand umfasst, der in Reihe mit einem zweiten Widerstand verbunden ist, und wobei die genannten ersten und zweiten Widerstände an einer Verbindung miteinander verbunden sind;
das Puffern der genannten Ausgabe der genannten Sensoreinrichtung, indem diese einem Gatter einer Transistorpuffereinrichtung zugeführt wird; und
das Bereitstellen einer Rückführungseinrichtung zwischen der genannten Transistorpuffereinrichtung und der genannten Last, wobei die genannte Rückführungseinrichtung einen Kondensator umfasst, der von einem Ausgang der genannten Transistorpuffereinrichtung mit der genannten Verbindung zwischen dem genannten ersten Widerstand und dem zweiten Widerstand verbunden ist, um eine Multiplikation des Widerstands der genannten Last zu erzeugen.

**13.** Verfahren nach Anspruch 12, wobei der genannte Schritt des Abfühlens der genannten Infrarotstrahlung den Schritt des Verwendens eines Sensors mit einem pyroelektrischen Keramikwerkstoff umfasst.

**14.** Verfahren nach Anspruch 12, wobei der genannte Schritt des Pufferns der genannten Ausgabe der genannten Sensoreinrichtung den Schritt des Verwendens eines Feldeffekttransistors umfasst.

**15.** Verfahren nach Anspruch 12, wobei der genannte Schritt des Bereitstellens einer Rückführung zum Erzeugen einer Multiplikation des Widerstands der genannten Last eine Spitzenamplitude eines Niederfrequenzverhaltens der genannten Sensoreinrichtung verbessert.

**Revendications**

1. Détecteur pyroélectrique comprenant:

   un moyen de captage pour capter un rayonnement infrarouge, ledit moyen de captage ayant une sortie;
   un moyen de charge connecté en parallèle audit moyen de captage pour produire une charge pour mesurer la sortie dudit moyen de captage, où ledit moyen de charge comprend une première résistance connectée en série à une seconde résistance et où ladite première résistance et ladite seconde résistance sont connectées à une jonction;
   un moyen d'amortissement à transistor ayant une porte couplée à ladite sortie dudit moyen de captage pour amortir ladite sortie; et
   un moyen de réaction comprenant un condensateur connecté entre une sortie dudit moyen d'amortissement à transistor et ladite jonction desdites première et seconde résistances pour produire la multiplication de la résistance de ladite charge.

2. Détecteur pyroélectrique selon la revendication 1 où ledit moyen de captage comprend une matière céramique pyroélectrique.

3. Détecteur pyroélectrique de la revendication 1 où ledit moyen d'amortissement comprend un transistor à effet de champ.

4. Détecteur pyroélectrique selon la revendication 1 où ledit moyen d'amortissement comprend un gain proche de l'unité.

5. Détecteur pyroélectrique selon la revendication 1 où ladite multiplication de ladite résistance de charge améliore une réponse basse fréquence de pointe dudit moyen de captage.

6. Détecteur pyroélectrique selon la revendication 1 où ledit moyen d'amortissement comprend une résistance de source pour produire une sortie amortie de la sortie dudit moyen de captage par ledit moyen d'amortissement.

7. Détecteur pyroélectrique comprenant:

   un moyen pour capter un rayonnement infrarouge;
   un moyen connecté en parallèle audit moyen de captage pour produire une charge pour mesurer la sortie dudit moyen de captage, ladite charge comprenant une première résistance de charge en série avec une seconde résistance;
   un moyen d'amortissement à transistor ayant une porte connectée à ladite sortie dudit moyen de captage pour amortir la sortie dudit moyen de captage;
   un diviseur de sortie ayant une première résistance de source connectée en série à une seconde résistance de source à une sortie dudit moyen d'amortissement à transistor; et
   un moyen de réaction comprenant un condensateur connecté entre la jonction de ladite première résistance de source et ladite seconde résistance de source à la jonction de ladite première résistance de charge et ladite seconde résistance pour produire la multiplication de ladite charge.

8. Détecteur pyroélectrique selon la revendication 7 où ledit moyen de captage comprend une matière céramique pyroélectrique.

9. Détecteur pyroélectrique selon la revendication 7 où ledit moyen d'amortissement comprend un transistor à effet de champ.

10. Détecteur pyroélectrique selon la revendication 7 où ledit moyen d'amortissement comprend un gain proche de l'unité.

11. Détecteur pyroélectrique selon la revendication 7 où ladite multiplication de ladite résistance de charge améliore une réponse basse fréquence de pointe dudit moyen de captage.

12. Méthode de production d'un détecteur pyroélectrique comprenant les étapes de:

prévoir un moyen de captage pour capter un rayonnement infrarouge, ledit moyen de captage ayant une sortie;
connecter une charge en parallèle audit moyen de captage, où ladite charge comprend une première résistance connectée en série et une seconde résistance et où lesdites première et seconde résistances sont connectées à une jonction;
amortir ladite sortie dudit moyen de captage en la fournissant à une porte d'un moyen d'amortisssement à transistor; et
prévoir un moyen de réaction entre ledit moyen d'amortissement à transistor et ladite charge, ledit moyen de réaction comprenant un condensateur connecté entre une sortie dudit moyen d'amortissement à transistor et ladite jonction desdits première et seconde résistances pour produire la multiplication de la résistance de ladite charge.

13. Méthode selon la revendication 12 où ladite étape de capter un rayonnement infrarouge comprend l'étape d'utiliser un capteur ayant une matière céramique pyroélectrique.

14. Méthode selon la revendication 12 où ladite étape d'amortir ladite sortie dudit moyen de captage comprend l'étape d'utiliser un transistor à effet de champ.

15. Méthode selon la revendication 12 où ladite étape de produire une réaction pour produire la multiplication de la résistance de ladite charge améliore une amplitude de pointe d'une réponse basse fréquence dudit moyen de captage.

FIG. 1
PRIOR ART

EP 0 983 491 B1

FIG. 2

FIG.3
PRIOR ART

FIG. 4

FIG. 5